# EUROPEAN PATENT APPLICATION

(11) **EP 4 364 941 A1**
(43) Date of publication of application: **08.05.2024**
(21) Application number: 22832758.1
(22) Date of filing: 09.06.2022
(51) Int. Cl.: B32B 27/10, B65D 65/40

(54) **METHOD FOR PRODUCING GAS BARRIER PAPER PACKAGING MATERIAL, AND GAS BARRIER PAPER PACKAGING MATERIAL**

(30) Priority: 30.06.2021 JP 2021108968
(71) Applicant: Sakata INX Corp., Osaka-shi, Osaka 550-0002 (JP)
(72) Inventor: ITO, Genta, Osaka-shi, Osaka 550-0002 (JP); TANAKA, Hiroki, Osaka-shi, Osaka 550-0002 (JP); KOBAYASHI, Kyohei, Osaka-shi, Osaka 550-0002 (JP); FUJITA, Atsushi, Osaka-shi, Osaka 550-0002 (JP); HARADA, Junichi, Osaka-shi, Osaka 550-0002 (JP)
(74) Representative: Cabinet Beau de Loménie
(86) International application number: PCT/JP2022/023243
(87) International publication number: WO 2023/276601

(57) **Abstract**

Provided is a method for producing a gas barrier paper packaging material which can impart sufficient gas barrier properties even when a barrier coating agent for forming a barrier layer is applied in a dry amount of 2 g/m² or less. The method for producing a gas barrier paper packaging material at least includes: a barrier layer forming step of applying a barrier coating agent to one side of a sealant film to form a barrier layer; and a lamination step of laminating the barrier layer and a paper substrate layer via an adhesive layer.

## Description

### TECHNICAL FIELD

The present invention relates to a method for producing a gas barrier paper packaging material and a gas barrier paper packaging material.

### BACKGROUND ART

Packaging materials used in these years have various issues. Use of a plastic film raises environmental issues such as the generation of microbeads. Use of aluminum foil with an aim of providing gas barrier properties causes the generation of metal powder when the packaging material is cut on the packing line. Adhesion of such metal powder to the contents does not allow detection of metal foreign objects with a metal detector after packing the contents. Use of aluminum foil also raises other issues including the production cost of wrapping paper, which is relatively high due to the use of aluminum foil, and poor disposability after use, such as generation of residue during incineration.

To approach these issues, paper packaging materials with gas barrier properties have been proposed recently.

Patent Literature 1, for example, discloses a paper barrier packaging material including a paper substrate and a plurality of coating layers provided on the paper substrate, wherein the plurality of coating layers include a water vapor barrier layer on the paper substrate and a gas barrier layer formed on the water vapor barrier layer, and the coating layers contain a water-soluble polymer or a water-suspendable polymer as a binder resin.

Patent Literature 1 discloses the production of the paper barrier packaging material by coating a paper substrate with a coating liquid for a water vapor barrier layer and a coating liquid for a gas barrier layer.

### CITATION LIST

### - Patent Literature

Patent Literature 1: WO 2013/069788

### SUMMARY OF INVENTION

### - Technical Problem

However, the gas barrier properties of the paper barrier packaging material produced by the method of producing a paper barrier packaging material by coating a paper substrate with a coating liquid for a water vapor barrier layer and a coating liquid for a gas barrier layer may be insufficient in cases where higher gas barrier properties (oxygen permeability) are required. In order to achieve sufficient gas barrier properties, the coating liquid for a water vapor barrier layer and the coating liquid for a gas barrier layer must be applied in a total dry amount of 4.2 g/m² or more.

Therefore, when the coating liquid for a water vapor barrier layer and the coating liquid for a gas barrier layer are applied in a total amount smaller than the above amount, disadvantageously, a uniform gas barrier layer may not be formed and the required gas barrier properties may not be achieved.

The present invention has been devised in consideration of the above problem and provides a method for producing a gas barrier paper packaging material which can impart sufficient gas barrier properties even when a barrier coating agent for forming a barrier layer is applied in a dry amount of 2 g/m² or less.

### - Solution to Problem

The present invention relates to a method for producing a gas barrier paper packaging material, the method at least including: a barrier layer forming step of applying a barrier coating agent to one side of a sealant film to form a barrier layer; and a lamination step of laminating the barrier layer and a paper substrate layer via an adhesive layer.

The method for producing a gas barrier paper packaging material of the present invention preferably further includes, prior to the barrier layer forming step, an anchor coating layer forming step of applying an anchor coating agent to one side of the sealant film to form an anchor coating layer, and the barrier layer forming step is performed on the side with the anchor coating layer.

In the method for producing a gas barrier paper packaging material of the present invention, the barrier coating agent preferably contains a barrier resin, an inorganic layered compound, and a dispersion medium.

The barrier resin preferably includes at least one selected from the group consisting of polyvinyl alcohol-based resins and ethylene-vinyl alcohol-based resins.

The lamination step preferably includes applying an adhesive for forming the adhesive layer in a dry amount of 0.1 to 5 g/m².

The barrier coating agent is preferably applied in the barrier layer forming step in a dry amount of 2 g/m² or less.

The anchor coating agent preferably contains at least one selected from the group consisting of polyester-based resins, polyether-based resins, polyurethane-based resins, polyethyleneimine-based resins, water-soluble polymers, and water-suspendable polymers.

The anchor coating agent is preferably applied in the anchor coating layer forming step in a dry amount of 2 g/m² or less.

The present invention also relates to a gas barrier paper packaging material at least including: a sealant film; a barrier layer; an adhesive layer; and a paper substrate layer in a stated order, the gas barrier paper packaging material having an oxygen permeability of 1 cc/m²·day·atm or less as measured in accordance with a method of JIS K7126B.

### - Advantageous Effects of Invention

The present invention can provide a method for producing a gas barrier paper packaging material which can impart sufficient gas barrier properties even when a barrier coating agent for forming a barrier layer is applied in a dry amount of 2 g/m² or less.

### BRIEF DESCRIPTION OF THE DRAWINGS

FIG. 1 is a cross-sectional view of a gas barrier paper packaging material produced in Example 1.
FIG. 2 is a cross-sectional view of a gas barrier paper packaging material produced in Comparative Example 1.

### DESCRIPTION OF EMBODIMENTS

The present invention relates to a production method at least including: a barrier layer forming step of applying a barrier coating agent to one side of a sealant film to form a barrier layer; and a lamination step of laminating the barrier layer and a paper substrate layer via an adhesive layer.

In the conventional structure, an oxygen barrier coating agent directly applied to a normal paper substrate may not be formed into a uniform film due to unevenness of the paper surface or penetration of the agent into the paper, leading to a failure in exhibition of gas barrier properties. To achieve exhibition of gas barrier properties on the paper substrate, an anchor coating agent needs to be applied first to improve the retention of the barrier coating agent, which increases the amount of applied agents.

In contrast, in the method of the present invention in which a film is coated with a barrier coating agent, the sealant film is smoother and does not allow penetration, as compared with the conventional structure. As a result, equivalent gas barrier properties can be achieved without a filler layer or moisture barrier layer (water vapor barrier layer) formed by applying an anchor coating agent for improving the retention of the barrier coating agent and with a small amount of applied agents.

However, the present invention does not need to be interpreted as being limited to the above mechanism.

### (Barrier layer forming step)

The method for producing a gas barrier paper packaging material of the present invention includes a barrier layer forming step of applying a barrier coating agent to one side of a sealant film to form a barrier layer.

The sealant film contains a resin that can be melted and fused by heat.

Examples of such resins include low-density polyethylene, medium-density polyethylene, high-density polyethylene, linear low-density polyethylene, polypropylene, ethylene-vinyl acetate copolymers, ionomer resins, ethylene-acrylic acid copolymers, ethylene-methyl acrylate copolymers, ethylene-methacrylic acid copolymers, and ethylene-propylene copolymers.

These may be used alone or in combination of two or more.

The sealant film may have a thickness of, for example, 10 to 100 um, or 15 to 50 um.

The barrier coating agent preferably contains a barrier resin, an inorganic layered compound, and a dispersion medium.

Examples of the barrier resin include highly crystalline resins such as polyvinyl alcohol-based resins, ethylene-vinyl alcohol copolymer resins (ethylene-vinyl alcohol-based resins), polyacrylonitrile-based resins, polyamide resins, polyester-based resins, polyurethane-based resins, and polyacrylic resins.

These may be used alone or in combination of two or more.

The barrier resin preferably has an oxygen permeability at a film thickness of 10 um at a room temperature of 1 (cc/m²·day·atm) or less.

The expression that the resin has an oxygen permeability at a film thickness of 10 um at a room temperature of 1 (cc/m²·day·atm) or less means that the value obtained in the measurement in conformity with the method of JIS K7126B using an oxygen permeability tester (product name "OX-TRAN 100" available from Mocon Inc.) at 23°C and 0% RH (relative humidity) is 1 (cc/m²·day·atm) or less.

The barrier resin is preferably a polyvinyl alcohol-based resin or an ethylene-vinyl alcohol-based resin, which contains hydroxy groups, because they have excellent gas barrier properties. More preferred is an ethylene-vinyl alcohol-based resin because it suffers less reduction in gas barrier properties even at a high humidity.

The polyvinyl alcohol-based resin may be polyvinyl alcohol, or a derivative or modified product of polyvinyl alcohol.

These may be used alone or in combination of two or more.

The polyvinyl alcohol-based resin preferably has a degree of polymerization of 100 to 5000, more preferably 500 to 3000.

The polyvinyl alcohol-based resin preferably has a degree of saponification of 60 mol% or higher, more preferably 75 mol% or higher.

The derivative of polyvinyl alcohol may be, for example, a polyvinyl alcohol derivative in which about 40 mol% of hydroxy groups are acetalized.

The modified product of polyvinyl alcohol may be, for example, a polyvinyl alcohol modified product obtainable by copolymerization with a monomer such as a carboxy group-containing monomer or an amino group-containing monomer.

The ethylene-vinyl alcohol (EVOH)-based resin is obtainable by saponification of an ethylene-vinyl acetate copolymer and has both good barrier properties at high humidity and good transparency.

The ethylene-vinyl alcohol (EVOH)-based resin preferably has an ethylene content of 20 to 60 mol%.

When the ethylene content is smaller than 20 mol%, water resistance and moisture resistance may be reduced and gas barrier properties at high humidity may be impaired, leading to reduction in stress cracking resistance.

When the ethylene content is greater than 60 mol%, water resistance and moisture resistance are improved but gas barrier properties may be reduced.

The ethylene-vinyl alcohol (EVOH)-based resin preferably has a degree of saponification of a vinyl acetate component of 95 mol% or higher.

When the degree of saponification of the vinyl acetate component is lower than 95 mol%, gas barrier properties and oil resistance may be reduced.

In order to achieve favorable dissolution stability in solvents and improved heat resistance, the ethylene-vinyl alcohol (EVOH)-based resin is more preferably a resin having a molecular weight lowered by molecular chain scission treatment with a peroxide or the like.

The molecular chain scission treatment is performed by reacting a peroxide or the like with the ethylene-vinyl alcohol-based copolymer. Examples of the peroxide include hydrogen peroxide, dialkyl peroxide compounds, and acyl peroxide compounds. Among these, particularly preferred is hydrogen peroxide.

The treatment can be specifically performed by the following method.

For example, a method in which hydrogen peroxide is used includes dissolving the ethylene-vinyl alcohol-based copolymer in a solvent mixture containing water and a lower alcohol to a concentration of about 1 to 50% by mass and adding a hydrogen peroxide solution (typically an aqueous solution of about 30 to 35% by mass) in an amount of 1 to 100% by mass relative to the ethylene-vinyl alcohol-based copolymer, followed by treatment at 40°C to 90°C for 5 to 50 hours under stirring.

The molecular chain scission treatment may be terminated at a point where the viscosity of the solution at the start is about 10% or less of the initial viscosity.

The ethylene-vinyl alcohol (EVOH)-based resin used is still more preferably a resin further subjected to decomposition and removal of residual hydrogen peroxide by adding an enzyme such as catalase.

The inorganic layered compound used can be an inorganic layered compound that is swollen and cleaved in a dispersion medium. Examples include the kaolinite group, which has a 1:1 phyllosilicate structure, the antigorite group, which belongs to the jamonite group, and the smectite group, the vermiculite group, which is a hydrous silicate mineral, and the mica group, which are classified depending on the number of interlayer cations.

Specific examples of the inorganic layered compound include kaolinite, dickite, nacrite, halloysite, antigorite, chrysotile, pyrophyllite, montmorillonite, beidellite, hectorite, saponite, sauconite, stevensite, tetrasilylic mica, sodium taeniolite, muscovite, margarite, talc, vermiculite, phlogopite, xanthophyllite, and chlorite. These may be natural or synthetic products.

Examples further include flaky silica.

These may be used alone or in combination of two or more.

From the standpoint of gas barrier properties and coating properties when used in a barrier coating agent, preferred among these is montmorillonite.

The dispersion medium used may be either an aqueous dispersion medium or an organic dispersion medium. The aqueous dispersion medium may be water alone or a dispersion medium prepared by mixing water with a water-miscible organic solvent such as an alcohol (e.g., methanol, ethanol, and propanol), a polyhydric alcohol (e.g., ethylene glycol, and propylene glycol) or an alkyl ether derivative thereof, an ester (e.g., ethyl formate, methyl acetate, and ethyl acetate), or a ketone (e.g., acetone).

In order to maintain an appropriate solid content, the dispersion medium used is preferably a mixture containing 50 to 95% by mass of water and 5 to 50% by mass of at least one selected from ethyl alcohol, propyl alcohol, and butyl alcohol which are lower alcohols having 2 to 4 carbon atoms.

In the barrier coating agent, the mass ratio of the barrier resin and the inorganic layered compound (barrier resin/inorganic layered compound) is preferably in the range of (30/70) to (50/50).

When the mass percentage of the inorganic layered compound is 50% by mass or less, the oxygen barrier properties may be lowered at high humidity. When the mass percentage of the inorganic layered compound exceeds 70% by mass, the physical properties of the resulting coating film (coating film strength) may be insufficient.

The barrier coating agent preferably contains the barrier resin, the inorganic layered compound, and the dispersion medium. The solid content of the barrier coating agent is preferably mainly constituted by the barrier resin and the inorganic layered compound.

Specifically, the barrier coating agent preferably contains the barrier resin and the inorganic layered compound in a total amount of 1 to 30% by mass, which allows more favorable exertion of the effects of the barrier resin and the inorganic layered compound.

The mass ratio of the barrier resin and the inorganic layered compound is the mass ratio calculated in terms of the solid content.

The barrier coating agent may contain additives such as a leveling agent, an antifoaming agent, an antiblocking agent such as wax or silica, a release agent such as metal soap or amide, an ultraviolet absorber, or an antistatic agent, as necessary.

The barrier coating agent may be prepared by any method. Examples include a method including adding and mixing the inorganic layered compound (which may be swollen and cleaved in advance in a dispersion medium such as water, if needed) to a solution containing the barrier resin and a dispersion medium, whereby the inorganic layered compound is dispersed; and a method including adding (dissolving) the barrier resin (which may be dissolved in a solvent in advance, if necessary) to a dispersion in which the inorganic layered compound is swollen and cleaved in a dispersion medium such as water.

In preparation of the barrier coating agent, the inorganic layered compound can be uniformly dispersed in the dispersion medium using a normal stirring device or dispersion device. In order to prepare a particularly transparent and stable dispersion of the inorganic layered compound, a high-pressure disperser can be used.

Examples of the high-pressure disperser include Gaulin (available from APV Gaulin), Nanomizer (available from Nanomizer Inc.), Microfluidizer (available from Microfluidics), Ultimizer (available from Sugino Machine Limited.), and DeBEE (available from Bee International).

The dispersion treatment by the high-pressure disperser is preferably performed under a pressure condition of 100 MPa or less.

Under the pressure condition exceeding 100 MPa, the inorganic layered compound is likely to be crushed, and the gas barrier properties of the gas barrier paper packaging material may be lowered.

The barrier coating agent may be applied by a common method such as a roll coating method using a gravure cylinder or the like, a doctor knife method, an air knife nozzle coating method, a bar coating method, a spray coating method, a dip coating method, and a coating method combining these methods.

In order to achieve a thin gas barrier paper packaging material, the barrier coating agent is preferably applied in a dry amount of 2 g/m² or less, more preferably 1 g/m² or less.

In order to impart sufficient gas barrier properties to the gas barrier paper packaging material, the barrier coating agent is preferably applied in a dry amount of 0.1 g/m² or more, more preferably 0.2 g/m² or more.

### (Lamination step)

The method for producing a gas barrier paper packaging material of the present invention includes a lamination step of laminating the barrier layer and a paper substrate layer via an adhesive layer.

The laminate obtained after the lamination step herein is also referred to as a laminated film.

The paper substrate layer preferably contains, for example, pulp, filler, and various auxiliary agents.

Examples of usable pulp include chemical pulps such as leaf bleached kraft pulp (LBKP), needle bleached kraft pulp (NBKP), leaf unbleached kraft pulp (LUKP), needle unbleached kraft pulp (NUKP), and sulfite pulp; mechanical pulps such as stone-ground wood pulp and thermomechanical pulp; and wood fibers such as deinked pulp and wastepaper pulp and non-wood fibers obtained from kenaf, bamboo, hemp, etc. These can be mixed to be used as appropriate.

The filler used may be a known filler such as white carbon, talc, kaolin, clay, heavy calcium carbonate, light calcium carbonate, titanium oxide, zeolite, and synthetic resin fillers.

Examples of the various auxiliary agents include retention improvers, drainage improvers, paper strength enhancers, internal sizing agents, dyes, optical brighteners, pH adjusters, antifoaming agents, pitch control agents, and slime control agents.

The paper substrate layer may be produced by any (papermaking) method, and may be produced by a papermaking technique such as acid papermaking, neutral papermaking, or alkaline papermaking using a known device such as a Fourdrinier former, an on-top hybrid former, or a gap former machine.

The paper substrate layer may consist of one layer or two or more layers. The surface of the paper substrate layer may be treated with various chemicals.

The paper substrate layer may have any thickness. It may be appropriately selected according to applications.

Examples of materials constituting the adhesive layer include solvent-free, solvent-based, water-based, or hotmelt adhesives containing polyurethane, polyester urethane, polyester, polycarbonate polyurethane, polyamide, epoxy resin, polyacrylic acid, polymethacrylic acid, polyethyleneimine, ethylene-acrylic acid copolymers, ethylene-methacrylic acid copolymers, polyvinyl acetate, polyolefins, modified polyolefins, polybutadiene, wax, casein, or mixtures thereof as main components.

The adhesive layer can be formed by applying the materials constituting the adhesive layer (adhesive), followed by drying.

A method for applying the materials constituting the adhesive layer can be appropriately selected from the methods exemplified as the application methods and drying methods of the barrier coating agents described above.

In terms of the adhesion force and thinning of the gas barrier paper packaging material, the lamination step preferably includes applying an adhesive for forming the adhesive layer in a dry amount of 0.1 to 5 g/m².

An adhesive for forming the adhesive layer is more preferably applied in a dry amount of 0.5 to 3 g/m².

### (Anchor coating layer forming step)

Preferably, the method for producing a gas barrier paper packaging material of the present invention further includes, prior to the barrier layer forming step, an anchor coating layer forming step of applying an anchor coating agent to one side of the sealant film to form an anchor coating layer, and the barrier layer forming step is performed on the side with the anchor coating layer.

The anchor coating layer forming step can improve the interlayer adhesion of the gas barrier paper packaging material.

The anchor coating agent preferably contains a resin and a solvent.

Examples of the resin contained in the anchor coating agent include polyester resins, polyether-based resins, polyurethane-based resins, polyethyleneimine-based resins, isocyanate resins, butadiene-based resins, acrylic resins, ethylene vinyl alcohol-based resins, vinyl-modified resins, epoxy-based resins, modified styrene-based resins, modified silicone-based resins, alkyl titanates, water-soluble polymers, and water-suspendable polymers.

These may be used alone or in combination of two or more.

The resin contained in the anchor coating agent may be a two-component curable resin consisting of a base resin and a curing agent. More preferably, the base resin is a polyester-based resin, a polyurethane-based resin, or an acrylic resin.

The curing agent may be any common curing agent such as an isocyanate-based curing agent or an epoxy-based curing agent.

From the standpoint of adhesion, the resin contained in the anchor coating agent preferably includes at least one selected from the group consisting of polyester-based resins, polyether-based resins, polyurethane-based resins, polyethyleneimine-based resins, water-soluble polymers, and water-suspendable polymers.

The solvent contained in the anchor coating agent may be any solvent that can dissolve the resin contained in the anchor coating agent. Examples thereof include methyl acetate, ethyl acetate, butyl acetate, methyl ethyl ketone, dioxolan, tetrahydrofuran, cyclohexanone, acetone, normal propanol, isopropanol, ethanol, and water.

These may be used alone or in combination of two or more.

The anchor coating agent preferably contains the solvent in an amount of 80 to 99% by mass in the total amount of the anchor coating agent.

The anchor coating agent may be applied by a common method such as a roll coating method using a gravure cylinder or the like, a doctor knife method, an air knife nozzle coating method, a bar coating method, a spray coating method, a dip coating method, and a coating method combining these methods.

In order to improve the adhesion between the sealant film and a barrier layer described later, the anchor coating agent is preferably applied in a dry amount of 2 g/m² or less, more preferably 1 g/m² or less, still more preferably 0.5 g/m² or less.

In order to achieve better adhesion between the sealant film and the barrier layer, the lower limit of the dry amount of the anchor coating agent applied is 0.1 g/m² or more.

The drying method may be a method of applying heat such as hot air drying, hot roll drying, high frequency irradiation, infrared irradiation, and UV irradiation.

The heating temperature in the drying method is not limited, and is preferably in the range of 60°C or higher and 140°C or lower.

### (Others)

The method for producing a gas barrier paper packaging material of the present invention may include a printing step of forming a print layer, if necessary.

The print layer is a layer composed of ink containing a pigment, a binder resin, a solvent, etc., and has characters, patterns, etc. formed therein.

The print layer may be formed, for example, on the sealant film or the paper substrate layer. The printing step may be performed before or after the barrier layer forming step, or before or after the lamination step.

The ink may be appropriately selected from known inks, in consideration of the design properties such as color tone, adhesion, safety as a food container, and the like.

In the printing step, printing may be performed using the ink by a printing method such as a gravure printing method, an offset printing method, a gravure offset printing method, a flexo printing method, or an inkjet printing method, thereby forming a print layer.

The print layer preferably has a thickness of, for example, 0.1 to 2.0 µm.

### (Gas barrier paper packaging material)

The gas barrier paper packaging material of the present invention at least includes a sealant film, a barrier layer, an adhesive layer, and a paper substrate layer in the stated order, and has an oxygen permeability of 1 cc/m²·day·atm or less as measured in accordance with the method of JIS K7126B.

In terms of thinning, the barrier coating agent is preferably applied in a dry amount of 2 g/m² or less, more preferably 1 g/m² or less in the gas barrier paper packaging material of the present invention.

In order to improve the peel strength, the gas barrier paper packaging material of the present invention preferably includes an anchor coating layer between the sealant film and the barrier layer.

In terms of thinning and interlayer adhesion, the anchor coating agent is preferably applied in a dry amount of 2 g/m² or less, more preferably 1 g/m² or less in the gas barrier paper packaging material of the present invention.

The gas barrier paper packaging material of the present invention preferably has an oxygen permeability of 1 cc/m²·day·atm or less, more preferably 0.9 cc/m²·day·atm or less, still more preferably 0.8 cc/m²·day·atm or less, as measured in accordance with the method of JIS K7126B.

A specific method for measuring the oxygen permeability includes, for example, leaving the gas barrier paper packaging material in an atmosphere of 25°C and 90% RH for 72 hours, and performing the measurement using an oxygen permeability measuring device (available from Mocon Inc., product name: OX-TRAN1/50) in an atmosphere of 25°C and 0% RH.

The gas barrier paper packaging material of the present invention preferably has a peel strength of 0.2 N/15 mm or higher, more preferably 0.5 N/15 mm or higher, still more preferably 0.7 N/15 mm or higher.

The peel strength can be measured, for example, by a method including cutting a sample gas barrier paper packaging material to a 15-mm width and measuring the T-peel strength (N/15 mm) using a peel tester.

The gas barrier paper packaging material of the present invention can be produced by the above method for producing a gas barrier paper packaging material of the present invention.

For the sealant film, the anchor coating layer, the barrier layer, the adhesive layer, and the paper substrate layer in the gas barrier paper packaging material of the present invention, the materials, thickness, and the like described in the method for producing a gas barrier paper packaging material of the present invention described above are applicable.

The gas barrier paper packaging material of the present invention may include a print layer formed therein, if necessary. For the print layer, the materials and the like described in the method for producing a gas barrier paper packaging material of the present invention described above are applicable.

### EXAMPLES

Hereinafter, the present invention will be described in more detail with reference to examples below, but the present invention is not limited to these examples. Unless otherwise specified, "%" means "% by mass" and "part(s)" means "part(s) by mass".

The materials used in examples and comparative examples are listed below.

### (Sealant film)

Non-oriented polyethylene film (Unilax LS-711C, thickness 30 um, available from Idemitsu Unitech Co., Ltd.) (Anchor coating agent)
Anchor coating agent (reactive anchor coating agent) 1 (polyester-based resin/polyurethane-based resin, Titabond T-160, available from Nippon Soda Co., Ltd.)
Anchor coating agent 2 (styrene acrylic resin, JONCRYL PDX-7741, available from BASF)

### (Barrier coating agent)

### <Preparation of ethylene-vinyl alcohol copolymer solution>

To a solvent mixture containing 41% by mass of purified water and 59% by mass of n-propyl alcohol (NPA) was added 15 parts by mass of an ethylene-vinyl alcohol copolymer (product name: Soaresin D2908, available from The Nippon Synthetic Chemical Industry Co., Ltd., which may be abbreviated as EVOH hereinbelow), followed by further addition of 13 parts by mass of a hydrogen peroxide solution having a concentration of 30% by mass and 0.004 parts by mass of FeSO₄. The mixture was warmed to 80°C under stirring, and reacted for about two hours.

Thereafter, the mixture was cooled, and catalase was added at a concentration of 3000 ppm for removal of residual hydrogen peroxide, whereby a nearly transparent ethylene-vinyl alcohol copolymer solution with a solid content of 15% by mass was obtained.

Next, to 100 parts by mass of the ethylene-vinyl alcohol copolymer solution was added 3 parts by mass of an ion exchange resin, and the mixture was stirred for one hour at a stirring speed that did not cause pulverization of the ion exchange resin. The ion exchange resin alone was filtered out using a strainer to remove ions, whereby a nearly transparent ethylene-vinyl alcohol copolymer resin solution with a solid content of 15% by mass was obtained.

### <Preparation of inorganic layered compound dispersion>

Four parts by mass of montmorillonite (product name: Kunipia F, available from Kunimine Industries Co., Ltd.), which is an inorganic layered compound, was added to 96 parts by mass of purified water with stirring and sufficiently dispersed using a high-pressure disperser at a pressure of 50 MPa.

Thereafter, the dispersion was kept at 40°C for one day, whereby an inorganic layered compound dispersion having a solid content of 4% by mass was obtained. To 100 parts by mass of the inorganic layered compound dispersion was added 3 parts by mass of an ion exchange resin, and the mixture was stirred for one hour at a stirring speed that did not cause pulverization of the ion exchange resin. The ion exchange resin alone was filtered out using a strainer to remove ions, whereby an inorganic layered compound dispersion with a solid content of 4% by mass was obtained.

### (Preparation of barrier coating agent)

To 58 parts by mass of a solvent mixture containing 50% by mass of purified water and 50% by mass of isopropanol was added 12 parts by mass of the ethylene-vinyl alcohol copolymer resin solution, followed by sufficient stirring for mixing.

To the solution was further added 30 parts by mass of the inorganic layered compound dispersion with stirring at high speed. The mixture was dispersed using a high-pressure disperser at a pressure set to 50 MPa, and passed through a 255-mesh filter, whereby a barrier coating agent (ethylene-vinyl alcohol copolymer resin/inorganic layered compound = 6/4 (solid content mass ratio)) with a solid content of 3% by mass was obtained.

### (Adhesive)

Urethane-based adhesive (Takelac A969V (ethyl acetate solution with a solid content of 70%)/Takenate (ethyl acetate solution with a solid content of 80%), available from Mitsui Takeda Chemicals Inc.)

### (Paper substrate layer)

One-side glazed paper (OKBLIZZARD, basis weight 70 g/m², available from Ojimateria Co., Ltd.)

### (Example 1)

The anchor coating agent 1 was applied to one side of the sealant film (non-oriented polyethylene film) using a bar coater No. 4 in a dry amount of 0.1 g/m², followed by drying with hot air at 60°C from a dryer, whereby an anchor coating layer was formed (anchor coating layer forming step) .

Next, the barrier coating agent was applied to the surface of the anchor coating layer using a bar coater No. 6 in a dry amount of 0.5 g/m², followed by drying with hot air at 60°C from a dryer, whereby a barrier layer was formed (barrier layer forming step).

Thereafter, the urethane-based adhesive was applied to the surface of the barrier layer in a dry amount of 2.5 g/m², whereby an adhesive layer was formed. The barrier layer and the paper substrate layer (one-side glazed paper) were laminated via the adhesive layer. Thus, a gas barrier paper packaging material for testing was produced.

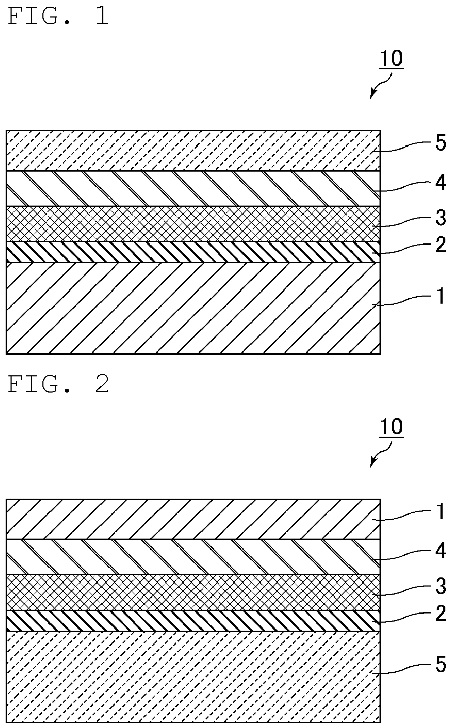

FIG. 1 is a cross-sectional view of a gas barrier paper packaging material produced in Example 1. As shown in FIG. 1, a gas barrier paper packaging material 10 for testing includes a sealant film 1, an anchor coating layer 2, a barrier layer 3, an adhesive layer 4, and a paper substrate layer 5 in the stated order.

### (Example 2)

The barrier coating agent was applied to one side of the sealant film (non-oriented polyethylene film) using a bar coater No. 6 in a dry amount of 0.5 g/m², followed by drying with hot air at 60°C from a dryer, whereby a barrier layer was formed (barrier layer forming step).

Thereafter, the urethane-based adhesive was applied to the surface of the barrier layer in a dry amount of 2.5 g/m², whereby an adhesive layer was formed. The barrier layer and the paper substrate layer (one-side glazed paper) were laminated via the adhesive layer. Thus, a gas barrier paper packaging material for testing was produced.

The gas barrier paper packaging material produced in Example 2 includes the sealant film, the barrier layer, the adhesive layer, and the paper substrate layer in the stated order.

### (Comparative Example 1)

The anchor coating agent 2 was applied to one side of the paper substrate layer (one-side glazed paper) using a bar coater No. 12 in a dry amount of 8.0 g/m², followed by drying with hot air at 60°C from a dryer, whereby an anchor coating layer was formed.

Next, the barrier coating agent was applied to the surface of the anchor coating layer using a bar coater No. 6 in a dry amount of 2.0 g/m², followed by drying with hot air at 60°C from a dryer, whereby a barrier layer was formed.

Thereafter, the urethane-based adhesive was applied to the surface of the sealant film (non-oriented polyethylene film) in a dry amount of 2.5 g/m², whereby an adhesive layer was formed. The barrier layer and the sealant film were laminated via the adhesive layer. Thus, a gas barrier paper packaging material for testing was produced.

FIG. 2 is a cross-sectional view of a gas barrier paper packaging material produced in Comparative Example 1. As shown in FIG. 2, the gas barrier paper packaging material 10 for testing includes the paper substrate layer 5, the anchor coating layer 2, the barrier layer 3, the adhesive layer 4, and the sealant film 1 in the stated order.

### (Comparative Example 2)

The anchor coating agent 1 was applied to one side of the paper substrate layer (one-side glazed paper) using a bar coater No. 4 in a dry amount of 0.1 g/m², followed by drying with hot air at 60°C from a dryer, whereby an anchor coating layer was formed.

Next, the barrier coating agent was applied to the surface of the anchor coating layer using a bar coater No. 6 in a dry amount of 0.5 g/m², followed by drying with hot air at 60°C from a dryer, whereby a barrier layer was formed.

Thereafter, the urethane-based adhesive was applied to the surface of the sealant film (non-oriented polyethylene film) in a dry amount of 2.5 g/m², whereby an adhesive layer was formed. The barrier layer and the sealant film were laminated via the adhesive layer. Thus, a gas barrier paper packaging material for testing was produced.

The gas barrier paper packaging material for testing produced in Comparative Example 2 includes the paper substrate layer, the anchor coating layer, the barrier layer, the adhesive layer, and the sealant film in the stated order, as in Comparative Example 1.

### <Measurement of oxygen permeability (cc/m²·day·atm)>

The gas barrier paper packaging materials for testing of Example 1 and the comparative examples were left in an atmosphere of 25°C and 90% RH for 72 hours, followed by measurement of the oxygen permeability (OTR value) using an oxygen permeability measuring device (available from Mocon Inc., product name: OX-TRAN1/50).

The measurement of oxygen permeability (OTR value) was performed at 25°C and 0% RH.

Table 1 shows the results.

### <Measurement of peel strength>

The gas barrier paper packaging materials for testing of the examples and comparative examples were left at 40°C for one day, and each cut to a 15-mm width. Using a peel tester (available from Yasuda Seiki Seisakusho Ltd.), the T-peel strength (N/15 mm) as the dry lamination strength (N/15 mm) was measured.

Table 1 shows the results.

"Paper peeling" in Table 1 means that the barrier layer was not separated and the paper substrate material peeled off.

**[Table 1]**

| | Example 1 | Example 2 | Comparative Example 1 | Comparative Example 2 |
|---|---|---|---|---|
| Layer (film) to which anchor coating agent is applied | Sealant film | Sealant film | Paper substrate layer | Paper substrate layer |
| Anchor coating agent | 1 | - | 2 | 1 |
| Amount of applied anchor coating agent after drying [g/m²] | 0.1 | - | 8.0 | 0.1 |
| Amount of applied barrier coating agent after drying [g/m²] | 0.5 | 0.5 | 20 | 0.5 |
| Amount of applied adhesive after drying [g/m²] | 2.5 | 2.5 | 2.5 | 2.5 |
| Layer (film) laminated on barrier layer via adhesive layer | Paper substrate layer | Paper substrate layer | Sealant film | Sealant film |
| Total amount of applied anchor coatnig agent and barrier coating agent after drying [g/m²] | 0.6 | 0.5 | 100 | 0.6 |
| Oxygen permeability OTR [cc/m²·day·atm] Condition (25°C, 0%RH) | 0.8 | 0.8 | 1.5 | >400 |
| Peel strength [N/15mm] | 0.7 Paper peeling | 0.2 | 0.7 Paper peeling | 0.7 Paper peeling |

The gas barrier paper packaging material produced by the method for producing a gas barrier paper packaging material of the present invention was confirmed to have sufficient gas barrier properties even when the barrier coating agent for forming a barrier layer is applied in a dry amount of 2 g/m² or less.

In particular, the gas barrier paper packaging material produced in Example 1 including the anchor coating layer forming step was confirmed to be also excellent in peel strength.

### INDUSTRIAL APPLICABILITY

The present invention can provide a method for producing a gas barrier paper packaging material which can impart sufficient gas barrier properties even when a barrier coating agent for forming a barrier layer is applied in a dry amount of 2 g/m² or less.

### REFERENCE SIGNS LIST

1 sealant film
2 anchor coating layer
3 barrier layer
4 adhesive layer
5 paper substrate layer
10 gas barrier paper packaging material

## Claims

1. A method for producing a gas barrier paper packaging material, the method at least comprising:
a barrier layer forming step of applying a barrier coating agent to one side of a sealant film to form a barrier layer; and
a lamination step of laminating the barrier layer and a paper substrate layer via an adhesive layer.

2. The method for producing a gas barrier paper packaging material according to claim 1,
wherein the method further comprises, prior to the barrier layer forming step, an anchor coating layer forming step of applying an anchor coating agent to one side of the sealant film to form an anchor coating layer, and the barrier layer forming step is performed on the side with the anchor coating layer.

3. The method for producing a gas barrier paper packaging material according to claim 1 or 2,
wherein the barrier coating agent contains a barrier resin, an inorganic layered compound, and a dispersion medium.

4. The method for producing a gas barrier paper packaging material according to claim 3,
wherein the barrier resin includes at least one selected from the group consisting of polyvinyl alcohol-based resins and ethylene-vinyl alcohol-based resins.

5. The method for producing a gas barrier paper packaging material according to any one of claims 1 to 4,
wherein the lamination step includes applying an adhesive for forming the adhesive layer in a dry amount of 0.1 to 5 g/m².

6. The method for producing a gas barrier paper packaging material according to any one of claims 1 to 5,
wherein the barrier coating agent is applied in the barrier layer forming step in a dry amount of 2 g/m² or less.

7. The method for producing a gas barrier paper packaging material according to claim 2,
wherein the anchor coating agent contains at least one selected from the group consisting of polyester-based resins, polyether-based resins, polyurethane-based resins, polyethyleneimine-based resins, water-soluble polymers, and water-suspendable polymers.

8. The method for producing a gas barrier paper packaging material according to claim 2,
wherein the anchor coating agent is applied in the anchor coating layer forming step in a dry amount of 2 g/m² or less.

9. A gas barrier paper packaging material at least comprising:
a sealant film;
a barrier layer;
an adhesive layer; and
a paper substrate layer in a stated order,
the gas barrier paper packaging material having an oxygen permeability of 1 cc/m²·day·atm or less as measured in accordance with a method of JIS K7126B.
